# EUROPEAN PATENT SPECIFICATION

(11) **EP 2 824 027 B1**
(45) Date of publication and mention of the grant of the patent: **20.04.2016**
(21) Application number: 13175688.4
(22) Date of filing: 09.07.2013
(51) Int. Cl.: B63H 21/17, B63H 21/30, F01P 3/20, H02K 7/14, B63J 2/12, B63H 23/24, B63H 5/125, B63H 21/38, H02K 9/19

(54) **Ship's propulsion unit**
Schiffsmaschinenanlage
Unité de propulsion de navire

(43) Date of publication of application: 14.01.2015
(73) Proprietor: ABB Oy, 00380 Helsinki (FI)
(72) Inventor: Säkkinen, Petri, 00980 Helsinki (FI)
(74) Representative: Boco IP Oy Ab

(56) References cited:
- EP-A1- 1 010 614

## Description

### Field of the invention

The invention relates to a ship's propulsion unit as defined in the preamble of independent claim 1.

The invention relates to ship's propulsion units such as azimuthing propulsion units as presented in US 5,403,216.

EP 1010614 A1 is considered as the closest prior art and discloses the preamble of claim 1.

US 6,312,298 B1 presents in an electromotive drive system in an improved form of a propeller motor for a ship, the cooling of the motor in a simple manner is provided. For recooling a circulating coolant, an annular duct is provided, which is arranged inside a shaft-like supporting part on its wall. With the assistance of this supporting part, the propeller motor is arranged, gondola-like, on the lower side of the ship.

US 6,485,339 B1 presents an electric propulsion pod for a ship having an electric propulsion pod heat rejection member. The electric propulsion pod is attached below the ship by a hollow ship access shaft. The electric propulsion pod contains an electric motor for producing a water propulsion. The electric motor generates an amount of heat that is conducted and subsequently released into the water through the electric propulsion pod and ship access shaft surfaces. The heat rejection member is fitted for increasing the conduction and subsequent release of the electric motor heat.

US 7,186,156 B1 presents propulsion unit for propelling a waterborne vessel includes an electric motor arranged to provide propulsion, and a housing arranged to contain the motor. The interior of the housing is maintained at an increased pressure of above roughly 2 bar to increase the cooling effect of a cooling gas maintained therein. An end region of the housing is provided with a heat exchange mechanism arranged to cool a cooling gas passing thereover. The heat exchange mechanism is associated with the housing such that, in use, water surrounding the housing absorbs heat therefrom.

WO0154973 a propulsion unit arrangement for a ship. The arrangement includes a motor unit comprising a motor housing which is arranged in the water and which comprises a motor and any control means related thereto, as well as a propeller which is arranged at a motor shaft. Said motor unit comprises an electrical motor for which the cooling is arranged to take place via the surface of the motor's whole circumference through the motor's casing structure directly into the water which surrounds said unit.

### Objective of the invention

The object of the invention is to provide an efficient cooling of a ship's propulsion unit.

### Short description of the invention

The ship's propulsion unit of the invention is characterized by the definitions of independent claim 1.

Preferred embodiments of the ship's propulsion unit are defined in the dependent claims.

"Closed" in means in this connection for example that water surrounding the propulsion unit, when the propulsion unit is at least partly immersed in water, is not let into the closed liquid cooling system, nor is liquid discharged from the closed liquid cooling system into water surrounding the propulsion unit, when the propulsion unit is at least partly immersed in water.

Cooling of the motor's whole circumference through the motor's casing structure is a very effective way to cool the stator of the electric motor. However, it is difficult to arrange strength wise optimum design for motor housing section connection to the supporting section if the top part of the motor housing section cannot be used for this purpose. Strength wise optimal design for motor housing connection to the support section would be such that supporting section would be connected rigidly to the entire length of the motor housing section. This can be arranged if supporting part is welded directly to top of motor housing section. However, in this case water cannot flush the whole circumference of motor housing section and cooling of electrical motor is reduced resulting hot spot to top of the motor housing section.

This problem can for example be solved by providing the support section with a closed liquid cooling system in the form of a closed liquid tank filled with liquid that is in contact with the top part of motor housing section as is the case in the first embodiment. Alternatively or additionally, this problem can be solved by using a closed liquid circulation cooling system that is filled with cooling liquid that flows in contact with the top part of motor housing section as is the case in the second, third, fourth, fifth and sixth embodiment. This arrangement is strength wise superior when compared to other arrangements with an opening above the motor housing section or with an opening between the motor housing section and the support section. This design can provide for smaller outer dimensions and weight of the final propulsion unit due to strength wise optimized design.

### List of figures

In the following the invention will described in more detail by referring to the figures, of which
Figure 1 shows a propulsion unit arrangement according to a first embodiment,
Figure 2 shows the working principle of the propulsion unit arrangement shown in figure 1,
Figures 3 to 5 shows some alternative configurations of section X-X in figure 1 and 2,
Figure 6 shows a propulsion unit arrangement according to a second embodiment,
Figure 7 shows the working principle of the propulsion unit arrangement shown in figure 6,
Figures 8 to 11 shows some alternative configurations of section X-X in figure 6 and 7,
Figure 12 shows a propulsion unit arrangement according to a third embodiment,
Figure 13 shows the working principle of the propulsion unit arrangement shown in figure 12,
Figures 14 to 17 shows some alternative configurations of section X-X in figure 12 and 13,
Figure 18 shows a propulsion unit arrangement according to a fourth embodiment,
Figure 19 shows the working principle of the propulsion unit arrangement shown in figure 18,
Figures 20 to 23 shows some alternative configurations of section X-X in figure 18 and 19,
Figure 24 shows a propulsion unit arrangement according to a fifth embodiment,
Figure 25 shows the working principle of the propulsion unit arrangement shown in figure 24,
Figures 26 to 29 shows some alternative configurations of section X-X in figure 24 and 25,
Figure 30 shows a propulsion unit arrangement according to a sixth embodiment,
Figure 31 shows the working principle of the propulsion unit arrangement shown in figure 30,
Figure 32 is a side view of the propulsion unit arrangement shown in figure 30,
Figures 33 to 36 show some alternative configurations of section X-X in figure 30 and 31.

### Detailed description of the invention

In the following the ship's propulsion unit and some preferred embodiments and variants of the ship's propulsion unit will be described in greater detail.

The propulsion unit (not marked with a reference numeral) comprises a shell structure 1 arranged below a hull 2 of the ship (not marked with a reference numeral) and immersible at least partly in water (not marked with a reference numeral) so that the shell structure 1 is at least partly surrounded by water.

The propulsion unit comprises an electric motor 3 for rotating a propeller 23 outside the shell structure 1. The electric motor 3 has a stator 4 and a rotor 5 for rotating in the stator 4. In the figures a propeller shaft 24 is connected to the rotor 5 for rotating with the rotor 5 as the rotor 5 rotates in the stator 4. In the figures the propeller shaft 24 is rotatable arranged in the shell structure by means of bearing arrangements 25. In the figures the propeller 23 is attached to the propeller shaft 24

The electric motor 3 is arranged in a motor housing section 6 of the shell structure 1 so that the stator 4 of the electric motor 3 is form-fitted into a cylindrical section 7 of the motor housing section 6 of the shell structure 1.

The cylindrical section 7 has a cylindrical outer surface 8.

The shell structure 1 includes a support section 26 having a lower end connected to the motor housing section 6 of the shell structure 1 and an upper end connected to the hull 2 of the ship. The upper end of the support section 26 may be connected to the hull 2 of the ship by means of a turning arrangement (not shown in the drawings) for turning the propulsion unit with respect to the hull 2 of the ship.

The propulsion unit comprises a closed liquid cooling system 9 having an inner space 10 containing liquid 11.

The inner space 10 of the closed liquid cooling system 9 is partly limited by the cylindrical outer surface 8 of the cylindrical section 7 of the motor housing section 6 so that liquid 11 in the closed liquid cooling system 9 is in direct contact with the cylindrical outer surface 8 of the cylindrical section 7 of the motor housing section 6 for exchanging thermal energy between the electric motor 3 arranged in the cylindrical section 7 of the motor housing section 6 and liquid in the inner space 10 of the closed liquid cooling system 9 via the cylindrical outer wall 7 of the motor housing section 6 of the shell structure 1 of the propulsion unit.

The inner space 10 of the closed liquid cooling system 9 is additionally partly limited by the shell structure 1 of the propulsion unit so that liquid in the inner space 10 of the closed liquid cooling system 9 is in direct contact with the shell structure 1 of the propulsion unit for exchanging thermal energy between liquid in the inner space 10 of the closed liquid cooling system 9 and water surrounding the propulsion unit via the shell structure 1 of the propulsion unit.

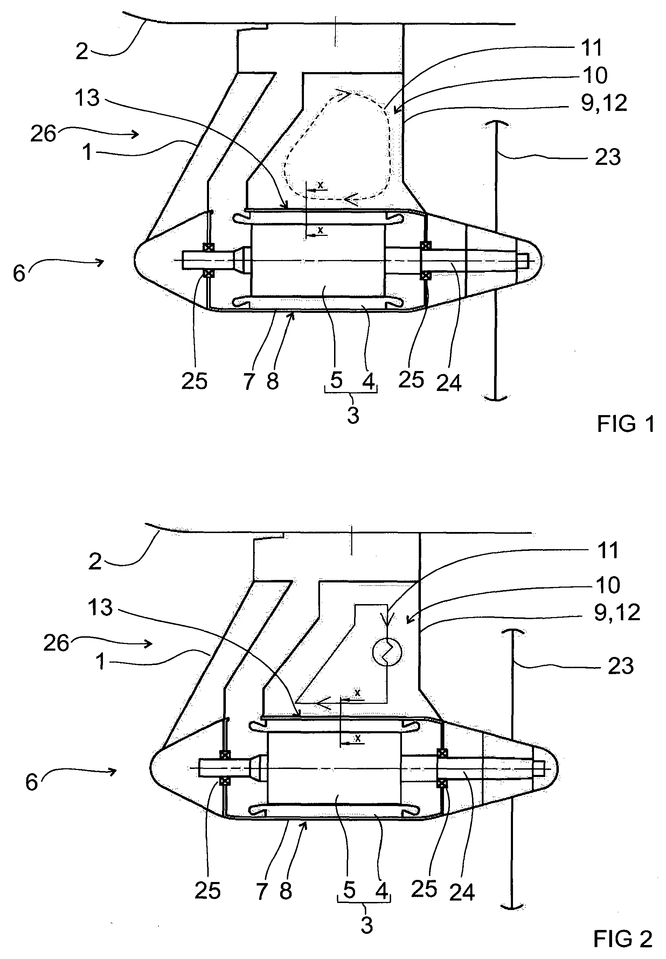

The closed liquid cooling system 9 may be in the form of a closed liquid tank 12 forming said inner space 10 containing liquid, as in the first embodiment of the propulsion unit shown in figures 1 to 5.

In a such embodiments of the propulsion unit the inner space 10 the closed liquid tank 12 is partly limited by a part 13 of the cylindrical outer surface 8 of the cylindrical section 7 of the motor housing section 6 so that liquid in the inner space 10 of the closed liquid tank is in direct contact with said part the cylindrical outer surface 8 of the cylindrical section 7 of the motor housing section 6 for exchanging thermal energy between the electric motor 3 arranged in the cylindrical section 7 of the motor housing section 6 and liquid in the inner space 10 of the closed liquid tank 12 via said part 13 the cylindrical section 7 of the motor housing section 6 between the electric motor 3 and liquid 11 in the closed liquid tank 12.

In a such embodiments of the propulsion unit the inner space 10 of the closed liquid tank 12 is additionally partly limited by the shell structure 1 of the propulsion unit so that liquid in the inner space 10 of the closed liquid tank 12 is in direct contact with the shell structure 1 for exchanging thermal energy between liquid in the inner space 10 of the closed liquid tank 12 and water surrounding the propulsion unit via the shell structure 1.

The closed liquid tank 12 may be provided with circulation means (not shown in the figures) for circulating liquid in the closed liquid tank.

The inner space 10 of the closed liquid tank 12 may be provided with baffles (not shown in the figures) for serving as heat exchanging elements between liquid in the inner space 10 of the closed liquid tank 12 and the support structure of the shell structure 1.

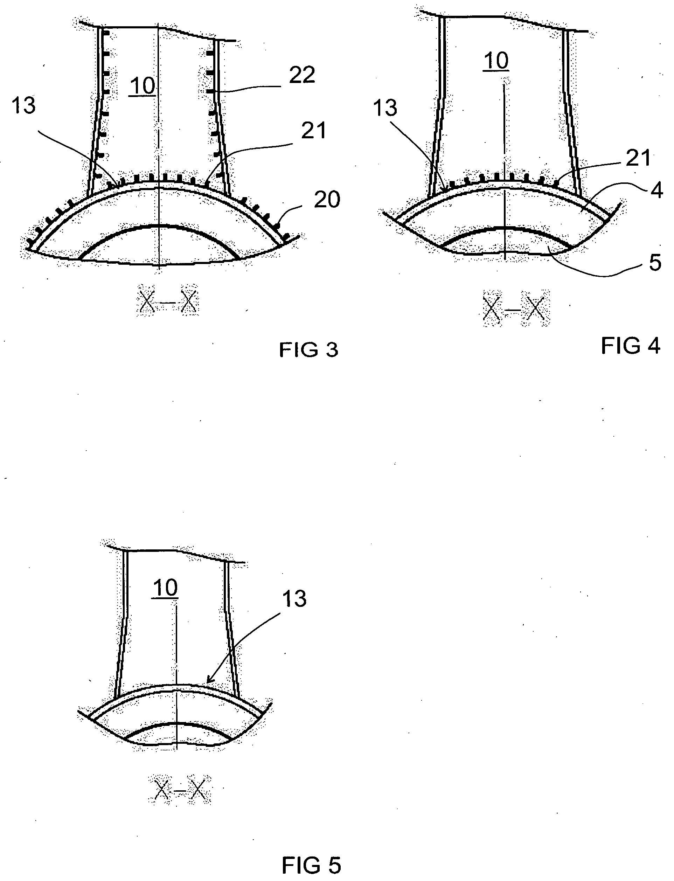

The closed liquid tank 12 may be provided with projecting heat-exchanging elements 22 extending from the support section 26 of the shell structure 1 into the closed liquid tank 12 for serving as heat exchanging elements between liquid 11 in the closed liquid tank 12 and the shell structure 1 of the propulsion unit for enhancing transfer of thermal energy between liquid in the closed liquid tank 12 and water surrounding the propulsion unit, as shown in Figure 3.

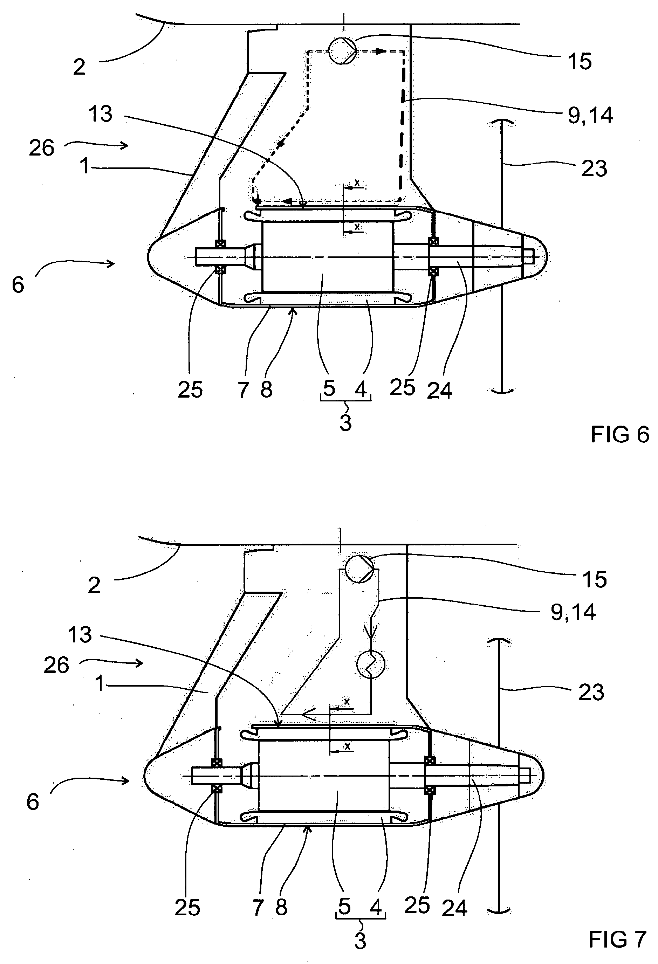

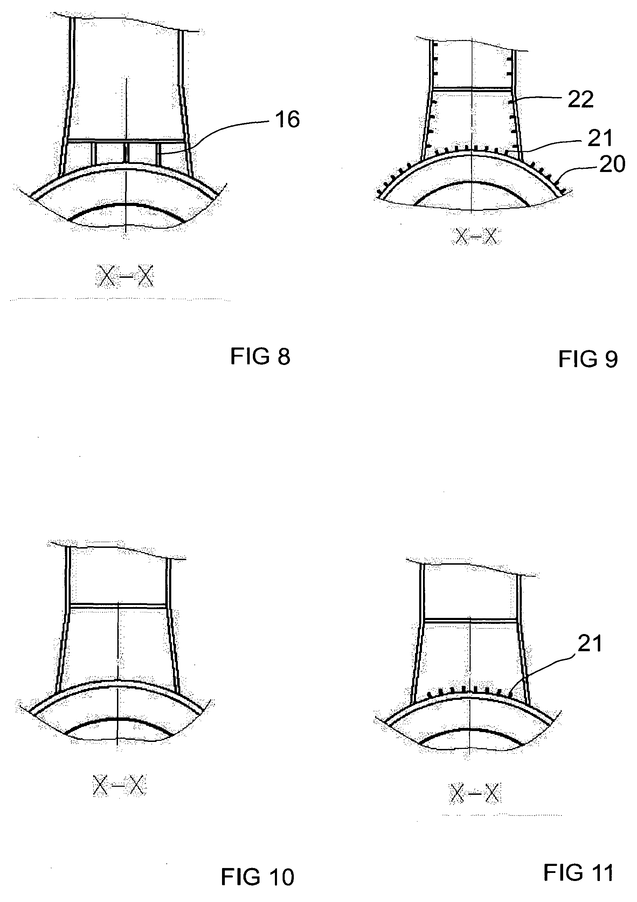

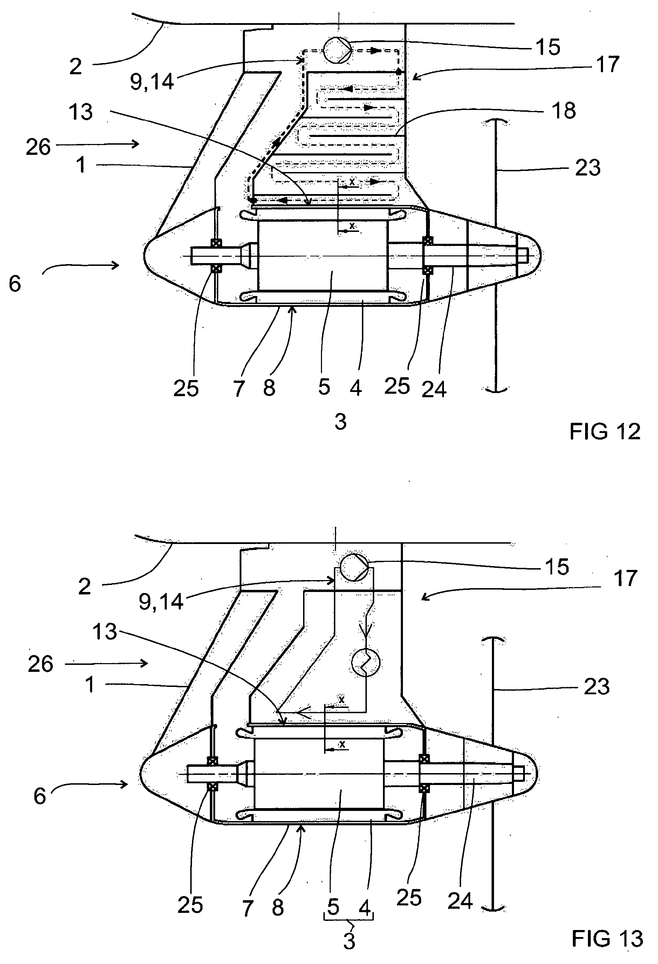

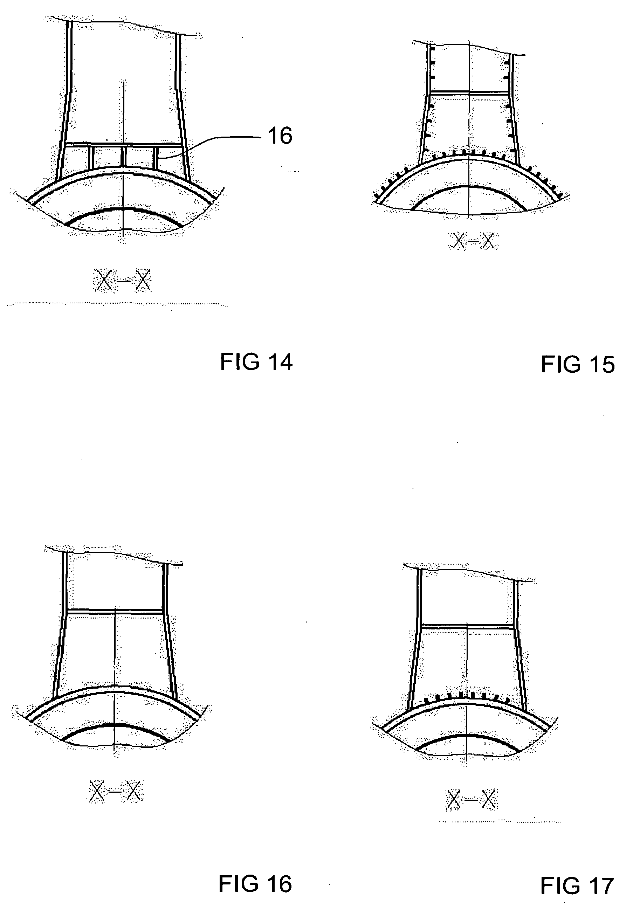

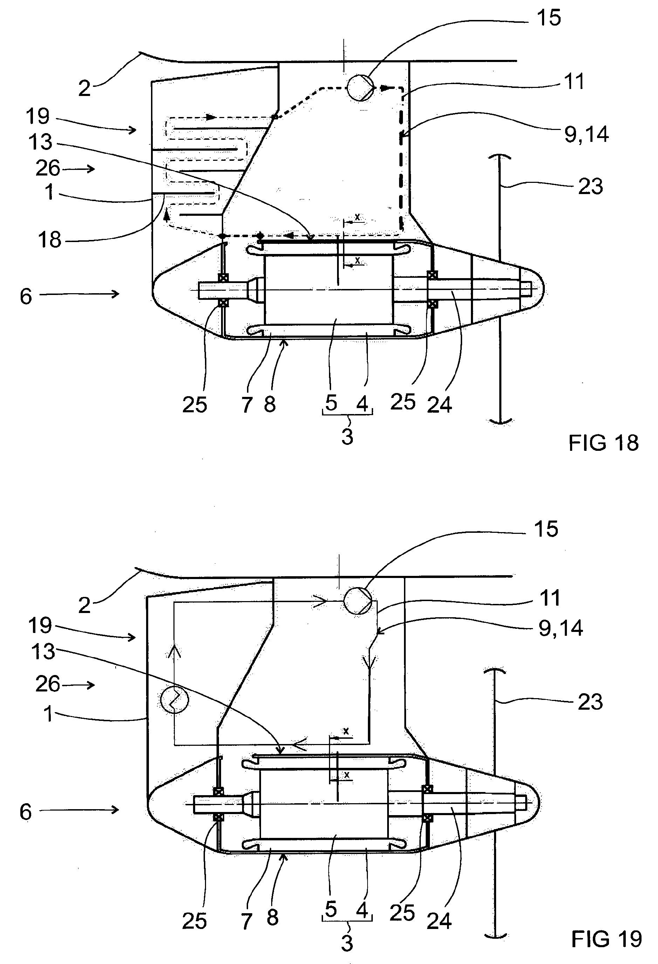

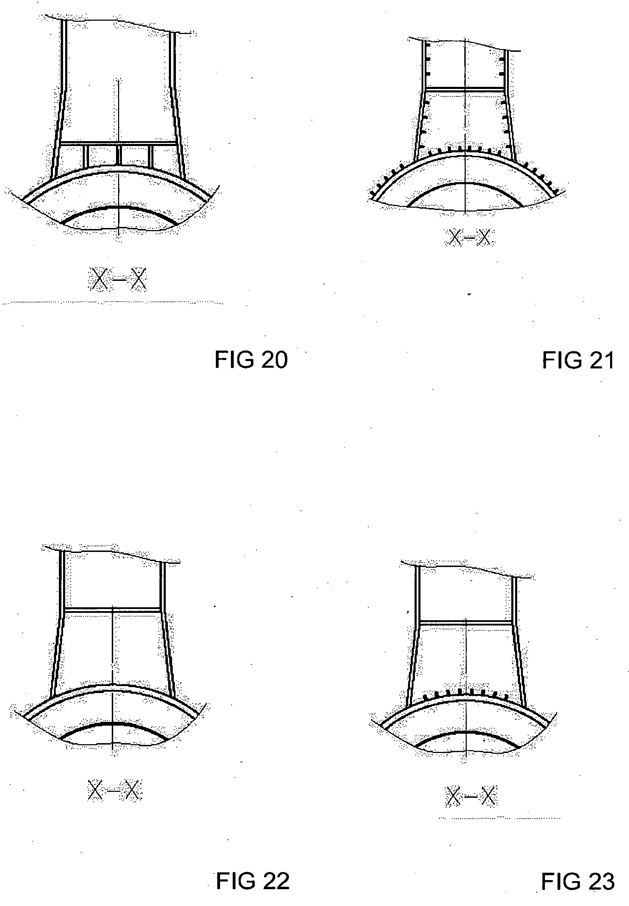

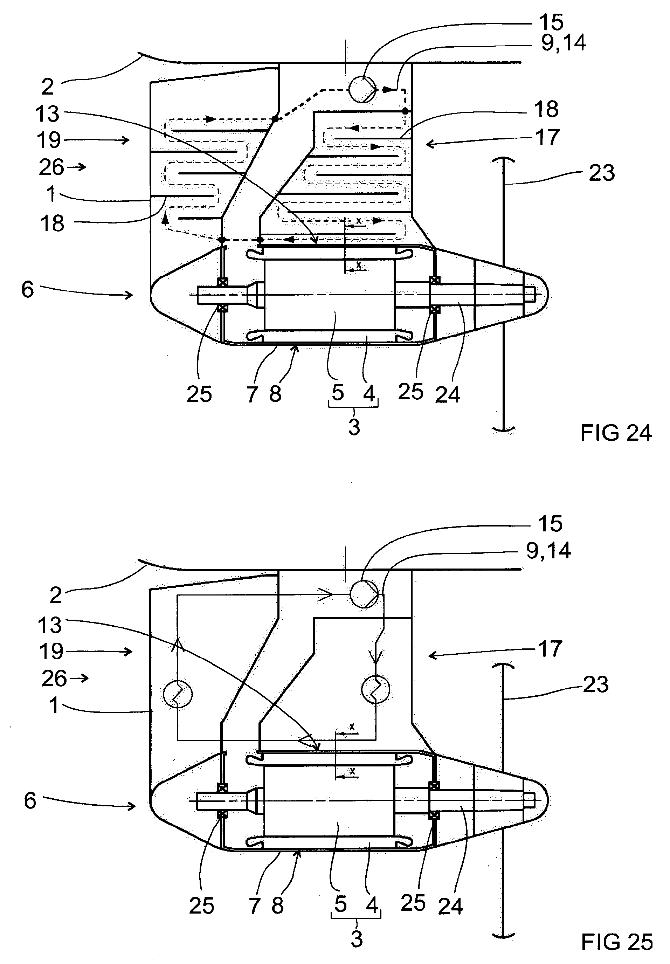

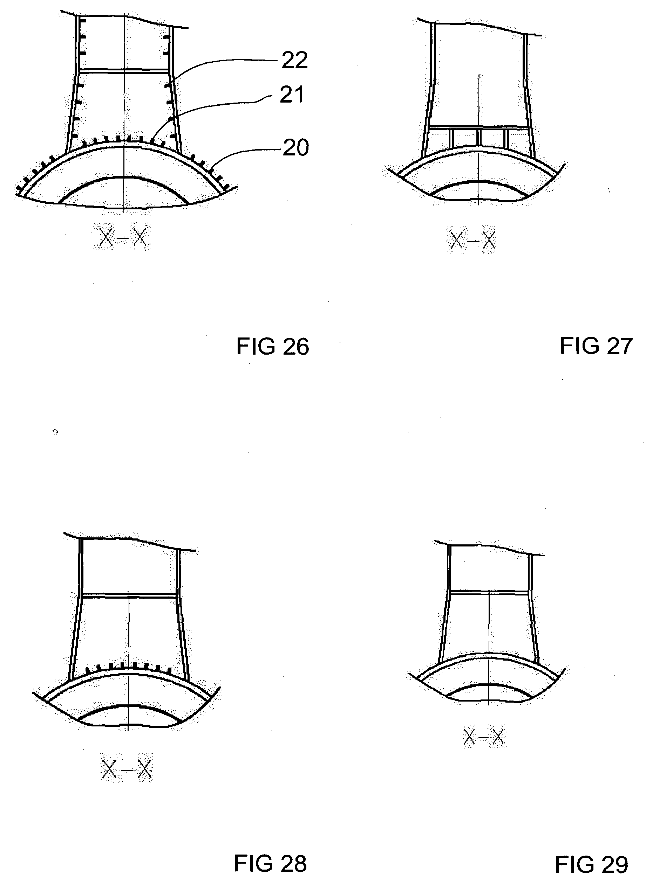

The closed liquid cooling system 9 may be in the form of a closed liquid circulation cooling system 14 having said inner space 10 containing liquid 11 and provided with liquid circulation means 15 for circulating liquid in the inner space 10 of the closed liquid circulation cooling system 14, as in the second embodiment of the propulsion unit illustrated in figures 6 to 11, in the third embodiment of the propulsion unit illustrated in figures 12 to 17, in the fourth embodiment of the propulsion unit illustrated in figures 18 to 23, and in the fifth embodiment of the propulsion unit illustrated in figures 24 to 29.

In a such embodiments of the propulsion unit, the inner space 10 of the closed liquid circulation cooling system 14 is partly limited by a part 13 of the cylindrical outer surface 8 of the cylindrical section 7 of the motor housing section 6 so that liquid flowing in the inner space 10 of the closed liquid circulation cooling system 14 is in direct contact with said part 13 of the cylindrical outer surface 8 of the cylindrical section 7 of the motor housing section 6 for exchanging thermal energy between the electric motor 3 arranged in the cylindrical section 7 of the motor housing section 6 and liquid flowing in the inner space 10 of the closed liquid circulation cooling system 14 via said part 13 of the cylindrical section 7 of the motor housing section 6 between the electric motor 3 and liquid circulating in the inner space 10 of the closed liquid circulation cooling system 14.

In a such embodiments of the propulsion unit, the inner space 10 of the closed liquid circulation cooling system 14 is additionally partly limited by the support section 26 of the shell structure 1 of the propulsion unit so that liquid flowing in the inner space 10 of the closed liquid circulation cooling system 14 is in direct contact with the support section 26 of the shell structure 1 for exchanging thermal energy between liquid flowing in the inner space 10 of the closed liquid circulation cooling system 14 and water surrounding the support section 26 of the shell structure 1 via the support section 26 of the shell structure 1.

If the closed liquid cooling system 9 is in the form of a closed liquid circulation cooling system 14 provided with liquid circulation means 15 for circulating liquid in the inner space 10 of the closed liquid circulation cooling system 14, said part 13 of the cylindrical outer surface 8 of the cylindrical section 7 of the motor housing section 6 partly limiting the inner space 10 of the closed liquid circulation cooling system 14 is preferably, but not necessarily, provided with partition elements 16 for creating several individual channels for liquid along said part of the cylindrical outer surface 8 of the cylindrical section 7 of the motor housing section 6.

If the closed liquid cooling system 9 is in the form of a closed liquid circulation cooling system 14 having said inner space 10 containing liquid 11 and provided with liquid circulation means 15 for circulating liquid in the inner space 10 of the closed liquid circulation cooling system 14, the closed liquid circulation cooling system 14 may be provided with a first liquid tank 17 at a point of the closed liquid circulation cooling system 14 where the inner space 10 of the closed liquid circulation cooling system is partly limited by said part 13 of the cylindrical section 7 of the cylindrical outer surface 8 of the motor housing section 6 as in the third embodiment of the propulsion unit illustrated in figures 12 to 17 and in the fifth embodiment of the propulsion unit illustrated in figures 24 to 29.

Such first liquid tank 17 has a first inner space (not marked with a reference numeral) that forms a part of the inner space 10 of the closed liquid circulation cooling system 14.

Such first liquid tank 17 is in fluid communication with the closed liquid circulation cooling system 14 such that liquid flowing in the closed liquid circulation cooling system 14 flows through the first inner space of the first liquid tank 17.

The first inner space of the first liquid tank 17 is partly limited by said part 13 of the cylindrical outer surface 8 of the cylindrical section 7 of the motor housing section 6 so that liquid in the first inner space of the first liquid tank 17 is in direct contact with the cylindrical outer surface 8 of the cylindrical section 7 of the motor housing section 6 for exchanging thermal energy between the electric motor 3 arranged in the cylindrical section 7 of the motor housing section 6 and liquid flowing in the first inner space of the first liquid tank 17 via said part 13 of the cylindrical outer surface 8 of the motor housing section 6.

Such first liquid tank 17 may additionally be partly limited by the support structure 26 of the shell structure 1 so that liquid 11 in the first inner space of the first liquid tank 17 is in direct contact with the support structure 26 of the shell structure 1 for exchanging thermal energy between liquid flowing in the first inner space of the first liquid tank 17 of the closed liquid circulation cooling system 14 and water surrounding the support structure 26 of the shell structure 1 via the support structure 26 of the shell structure 1.

The first inner space of such first liquid tank 17 may be provided with baffles 18 for guiding liquid through the first inner space of the first liquid tank 17 to prolong the residence time of liquid in the first inner space of the first liquid tank 17 and/or for serving as heat exchanging elements between liquid flowing through the first inner space of the first liquid tank 17 and the support structure 26 of the shell structure 1.

Such first liquid tank may be provided with projecting heat-exchanging elements 22 extending from the shell structure 1 into the first liquid tank 17 for serving as heat exchanging elements between liquid flowing through the first liquid tank 17 and the shell structure 1 of the propulsion unit for enhancing transfer of thermal energy between the electric motor 3 in the motor housing section 6 and liquid in the first liquid tank 17, as shown in drawings 15 and 26.

If the closed liquid cooling system 9 is in the form of a closed liquid circulation cooling system 14 having said inner space 10 containing liquid and provided with liquid circulation means 15 for circulating liquid in the inner space 10 of the closed liquid circulation cooling system 14, the closed liquid circulation cooling system 14 may be provided with a second liquid tank 19 at a point of the closed liquid circulation cooling system where the closed liquid circulation cooling system is partly limited by the support section 26 of the shell structure 1 of the propulsion unit so that the second liquid tank 19 is partly limited by said part of the support section 26 of the shell structure 1, as in the fourth embodiment of the propulsion unit illustrated in figures 18 to 23 and in the fifth embodiment of the propulsion unit illustrated in figures 24 to 29.

The second liquid tank 19 has a second inner space (not marked with a reference numeral) that forms a part of the inner space 10 of the closed liquid circulation cooling system 14.

The second liquid tank 19 is in fluid communication with the closed liquid circulation cooling system 14 such that liquid flowing in the closed liquid circulation cooling system 14 flows through the second inner space of the second liquid tank 19.

Such second liquid tank 19 is partly limited by the support section 26 of the shell structure 1 so that liquid in the second inner space of the second liquid tank 19 is in direct contact with the support section 26 of the shell structure 1 for exchanging thermal energy between liquid flowing in the second inner space of the second liquid tank 19 of the closed liquid circulation cooling system 14 and water surrounding the support section 26 of the shell structure 1 via the support section 26 of the shell structure 1.

The second inner space of such second liquid tank 19 may be provided with baffles 18 for guiding liquid through the second inner space of the second liquid tank 19 to prolong the residence time of liquid in the second inner space of the second liquid tank 19 and/or for serving as heat exchanging elements between liquid flowing through the second inner space of the second liquid tank 19 and the support structure 26 of the shell structure 1.

Such second liquid tank 19 may be provided with projecting heat-exchanging elements (not shown in the drawings) extending from the support structure 26 of the shell structure 1 into the second liquid tank 19 for serving as heat exchanging elements between liquid flowing through the second liquid tank 19 and said part of the shell structure 1 of the propulsion unit for enhancing transfer of thermal energy between water surrounding the support structure 26 of the shell structure 1 and liquid in the closed liquid cooling system 9.

In the propulsion unit, the lower end of the support section 26 of the shell structure 1 may connected to the motor housing section 6 of the shell structure 1 so that the cylindrical outer surface 8 of the cylindrical section 7 of the motor housing section 6 of the shell structure 1 of the propulsion unit partly forms the outermost surface of the propulsion unit, as is the case in the embodiments shown in the drawings. Such part of the cylindrical outer surface 8 of the cylindrical section 7 of the motor housing section 6 forming the outermost surface of the propulsion unit may be provided with projecting heat-exchanging elements 20 for enhancing transfer of thermal energy between the electric motor 3 in the motor housing section 6 and water surrounding the part of the cylindrical section 7 of the motor housing section 6 forming the outermost surface of the propulsion unit, as is the case in the embodiments shown in the drawings 4, 9, 15, 21, and 26.

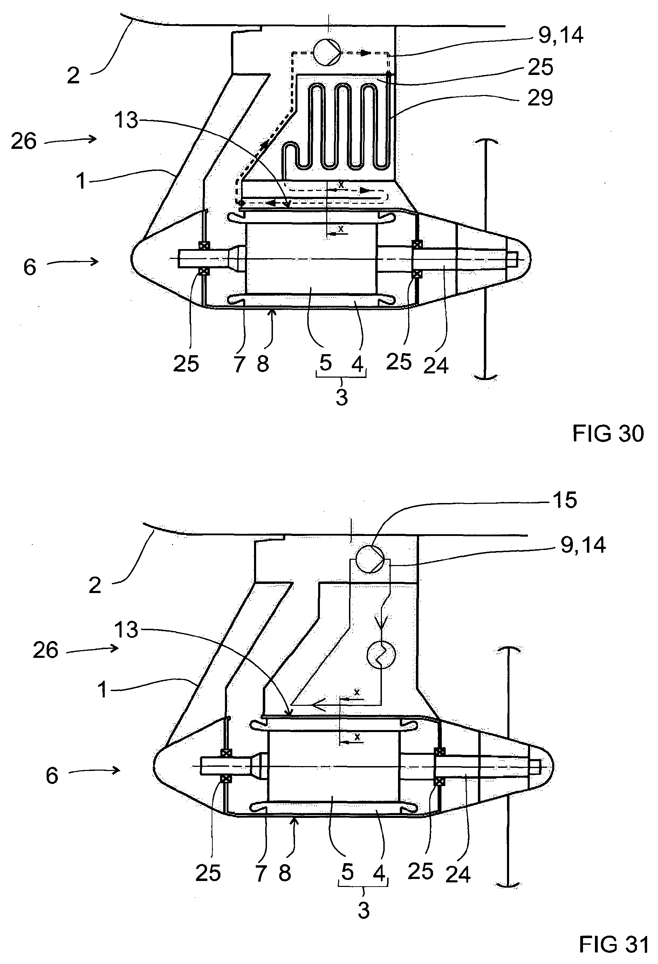

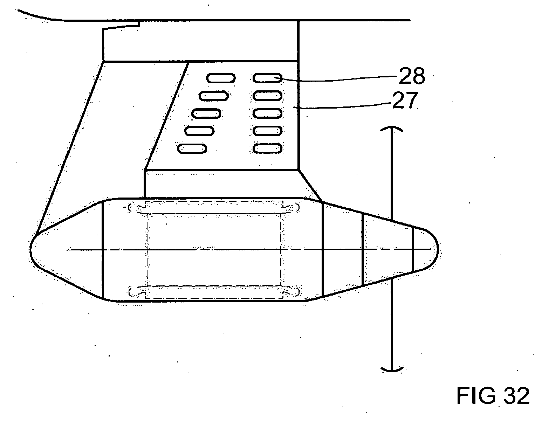

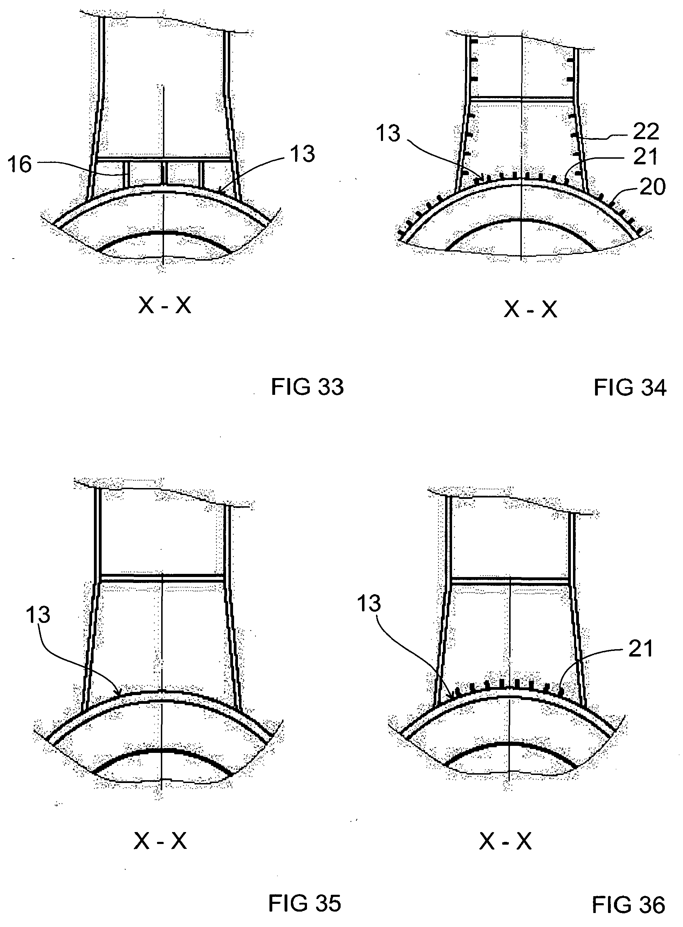

The propulsion unit the support section 26 of the shell structure 1 may in some embodiments be provided with a cavity 25 in fluid communication with water surrounding the shell structure 1 for allowing water surrounding the shell structure to enter the cavity 25 and to exit the cavity 25. A such embodiment is shown in figures 30 to 36. In such embodiments the closed liquid circulation cooling system 14 comprises a tube section 29 so that the inner space of the closed liquid circulation cooling system 14 is partly limited by the tube section 29. In such embodiments the tube section 29 is arranged in the cavity 25 so that an outer surface of the tube section 29 is in the cavity 25 in direct contact with water surrounding the shell structure 1. The tube section 29 may be a part of a liquid-liquid-heat exchanger for exchanging thermal energy between liquid in the inner space 10 of the closed liquid circulation cooling system 14 and water surrounding the shell structure, which liquid-liquid-heat exchanger is arranged in the cavity 25. If the support section of the shell structure is provided with a cavity 25 in fluid communication with water surrounding the shell structure 1 for allowing water surrounding the shell structure 1 to enter the cavity 25 and to exit the cavity 25, the cavity 25 may, as shown in figure 32, be at least partly closed by at least one cover 27 forming a part of the shell structure 1. A such cover 27 may be provided with at least one opening 28 for allowing water surrounding the shell structure 1 to enter the cavity 25 and to exit the cavity 25.

In the propulsion unit, the cylindrical section 7 of the motor housing section 6 is preferably, but not necessarily, of a single-layer construction, as is the case in the embodiments shown in the drawings.

In the propulsion unit, the part of the cylindrical outer surface 8 of the cylindrical section 7 of the motor housing section 6 in contact with liquid in the closed liquid cooling system 9 is preferably, but not necessarily, provided with projecting heat-exchanging elements 21 for enhancing transfer of thermal energy between the electric motor 3 in the motor housing section 6 and liquid in the second liquid tank, as shown in drawings 3, 4, 9, 11, 15, 17, 21, 23, 26 and 28.

In the propulsion unit, the closed liquid cooling system 9 is preferably, but not necessarily, arranged fully enclosed by the shell structure 1 of the propulsion unit as is shown in the drawings.

In the propulsion unit, the electric motor 3 is preferably, but not necessarily, a permanent-magnet electric motor 3.

It is apparent to a person skilled in the art that as technology advances, the basic idea of the invention can be implemented in various ways. The invention and its embodiments are therefore not restricted to the above examples, but they may vary within the scope of the claims.

## Claims

1. A ship's propulsion unit such as a ship's azimuthing propulsion unit, wherein the propulsion unit comprising
a shell structure (1) arranged below a hull (2) of the ship and immersible at least partly in water so that the shell structure (1) is at least partly surrounded by water, and
an electric motor (3) for rotating a propeller (23) outside the shell structure (1),
wherein the electric motor (3) having a stator and a rotor (5) for rotating in the stator (4), wherein the electric motor (3) is arranged in a motor housing section (6) of the shell structure (1) so that the stator (4) of the electric motor (3) is form-fitted into a cylindrical section (7) of the motor housing section (6) of the shell structure (1),
wherein the cylindrical section (7) having a cylindrical outer surface (8), and
wherein the shell structure (1) includes a support section having a lower end connected to the motor housing section (6) of the shell structure (1) and an upper end connected to the hull (2) of the ship,
**characterized**
**by** a closed liquid cooling system (9) having an inner space (10) containing liquid,
by the inner space (10) of the closed liquid cooling system (9) being partly limited by the cylindrical outer surface (8) of the cylindrical section (7) of the motor housing section (6) so that liquid in the inner space (10) of the closed liquid cooling system (9) is in direct contact with the cylindrical outer surface (8) of the cylindrical section (7) of the motor housing section (6) for exchanging thermal energy between the electric motor (3) arranged in the cylindrical section (7) of the motor housing section (6) and liquid in the inner space (10) of the closed liquid cooling system (9) via the cylindrical section (7) of the motor housing section (6), and
by the inner space (10) of the closed liquid cooling system (9) being partly limited by the shell structure (1) of the propulsion unit so that liquid in the inner space (10) of the closed liquid cooling system (9) is in direct contact with the shell structure (1) of the propulsion unit for exchanging thermal energy between liquid in the inner space (10) of the closed liquid cooling system (9) and water surrounding the propulsion unit via the shell structure (1) of the propulsion unit.

2. The propulsion unit according to claim 1, **characterized**
**by** the closed liquid cooling system (9) being in the form of a closed liquid tank (12) forming said inner space (10) containing liquid,
by the inner space (10) of the closed liquid tank (12) being partly limited by a part (13) of the cylindrical outer surface (8) of the cylindrical section (7) of the motor housing section (6) so that liquid in the inner space (10) of the closed liquid tank (12) is in direct contact with said part (13) the cylindrical outer surface (8) of the cylindrical section (7) of the motor housing section (6) for exchanging thermal energy between the electric motor (3) arranged in the cylindrical section (7) of the motor housing section (6) and liquid in the inner space (10) of the closed liquid tank (12) **via** said part (13) of the cylindrical section (7) of the motor housing section (6) between the electric motor (3) and liquid in the inner space (10) of the closed liquid tank (12), and
by the inner space (10) of the closed liquid tank (12) being partly limited by the shell structure (1) of the propulsion unit so that liquid in the inner space (10) of the closed liquid tank (12) is in direct contact with the shell structure (1) for exchanging thermal energy between liquid in the inner space (10) of the closed liquid tank (12) and water surrounding the shell structure (1) **via** the shell structure (1).

3. The propulsion unit according to claim 1, **characterized**
**by** the closed liquid cooling system (9) is in the form of a closed liquid circulation cooling system (14) having said inner space (10) containing liquid and provided with liquid circulation means (15) for circulating liquid in the inner space (10) of the closed liquid circulation cooling system (14),
by the inner space (10) of the closed liquid circulation cooling system (14) being partly limited by a part (13) of the cylindrical outer surface (8) of the cylindrical section (7) of the motor housing section (6) so that liquid flowing in the inner space (10) of the closed liquid circulation cooling system (14) is in direct contact with said part of the cylindrical outer surface (8) of the cylindrical section (7) of the motor housing section (6) for exchanging thermal energy between the electric motor (3) arranged in the cylindrical section (7) of the motor housing section (6) and liquid flowing in the inner space (10) of the closed liquid circulation cooling system (14) via said part (13) of the cylindrical section (7) of the motor housing section (6) between the electric motor (3) and liquid circulating in the inner space (10) of the closed liquid circulation cooling system (14), and
by the inner space (10) of the closed liquid circulation cooling system (14) being additionally partly limited by the support section (26) of the shell structure (1) of the propulsion unit so that liquid flowing in the inner space (10) of the closed liquid circulation cooling system (14) is in direct contact with the support section (26) of the shell structure (1) for exchanging thermal energy between liquid flowing in the inner space (10) of the closed liquid circulation cooling system (14) and water surrounding the support section (26) of the shell structure (1) via the support section (26) of the shell structure (1).

4. The propulsion unit according to claim 3, **characterized by** said part (13) of the cylindrical outer surface (8) of the cylindrical section (7) of the motor housing section (6) in contact with liquid in the inner space (10) of the closed liquid circulation cooling system (14) being provided with partition elements (16) for creating several individual flows of liquid along said part (13) of the cylindrical outer surface (8) of the cylindrical section (7) of the motor housing section (6).

5. The propulsion unit according to claim 3 or 4, **characterized**
**by** the closed liquid circulation cooling system (14) is provided with **a first liquid tank (17)** at a point of the closed liquid circulation cooling system (14) where the inner space (10) of the closed liquid circulation cooling system (14) is partly limited by said part (13) of the cylindrical outer surface (8) of the cylindrical section (7) of the motor housing section (6),
by the first liquid tank (17) having a first inner space that forms a part of the inner space (10) of the closed liquid circulation cooling system (14),
by the first liquid tank (17) being in fluid communication with the closed liquid circulation cooling system (14) such that liquid flowing in the closed liquid circulation cooling system (14) flows through the first inner space of the first liquid tank (17), and
by the first inner space of the first liquid tank (17) being partly limited by said part of the cylindrical outer surface (8) of the cylindrical section (7) of the motor housing section (6) so that liquid in **a first inner space** of the first liquid tank (17) is in direct contact with the cylindrical outer surface (8) of the cylindrical section (7) of the motor housing section (6) for exchanging thermal energy between the electric motor (3) arranged in the motor housing section (6) and liquid flowing in the first inner space of the first liquid tank (17) via said part of the cylindrical outer surface (8) of the cylindrical section (7) of the motor housing section (6).

6. The propulsion unit according to claim 5, **characterized by** first liquid tank (17) being additionally partly limited by the support structure (26) of the shell structure (1) so that liquid in the first inner space of the first liquid tank (17) is additionally in direct contact with the support structure (26) of the shell structure (1) for exchanging thermal energy between liquid flowing in the first inner space of the first liquid tank (17) of the closed liquid circulation cooling system (14) and water surrounding the support structure (26) of the shell structure (1) via the support structure (26) of the shell structure (1).

7. The propulsion unit according to any of the claims 3 to 6, **characterized by** the closed liquid circulation cooling system (14) is provided with a second liquid tank (19) at a point of the closed liquid circulation cooling system (14) where the closed liquid circulation cooling system (14) is partly limited by the support section (26) of the shell structure (1) so that the second liquid tank (19) is partly limited by the support section (26) of the shell structure (1),
by the second liquid tank (19) having a second inner space that forms a part of the inner space (10) of the closed liquid circulation cooling system (14),
by the second liquid tank (19) being in fluid communication with the closed liquid circulation cooling system (14) such that liquid flowing in the closed liquid circulation cooling system (14) flows through the second inner space of the second liquid tank (19), and
by the second liquid tank (19) being partly limited by the support section (26) of the shell structure (1) so that liquid in the second inner space of the second liquid tank (19) is in direct contact with the support section (26) of the shell structure (1) for exchanging thermal energy between liquid flowing in the second inner space of the second liquid tank (19) and water surrounding the support section (26) of the shell structure (1) via the support section (26) of the shell structure (1).

8. The propulsion unit according to any of the claims 3 to 7, **characterized**
**by** the support section (26) of the shell structure (1) being provided with a cavity (25) in fluid communication with water surrounding the shell structure (1) for allowing water surrounding the shell structure (1) to enter the cavity (25) and to exit the cavity (25),
by the closed liquid circulation cooling system (14) comprising a tube section (29),
by the inner space of the closed liquid circulation cooling system (14) being partly limited by the tube section (29), and
by the tube section (29) being arranged in the cavity (25) so that an outer surface of the tube section (29) is in the cavity (25) in direct contact with water surrounding the shell structure (1).

9. The propulsion unit according to claim 8, **characterized**
**by** the tube section (29) being a part of a liquid-liquid-heat exchanger for exchanging thermal energy between liquid in the inner space (10) of the closed liquid circulation cooling system (14) and water surrounding the shell structure (1), and
by said liquid-liquid-heat exchanger being arranged in the cavity (25).

10. The propulsion unit according to claim 8 or 9, **characterized**
**by** the cavity (25) being at least partly closed by at least one cover (27) forming a part of the shell structure (1).

11. The propulsion unit according to any of the claims 1 to 10, **characterized by** the lower end of the support section (26) of the shell structure (1) being connected to the motor housing section (6) of the shell structure (1) so that the cylindrical outer surface (8) of the cylindrical section (7) of the motor housing section (6) of the shell structure (1) of the propulsion unit partly forms the outermost surface of the propulsion unit.

12. The propulsion unit according to claim 11, **characterized by** the part of the cylindrical outer surface (8) of the cylindrical section (7) of the motor housing section (6) forming the outermost surface of the propulsion unit being provided with projecting heat-exchanging elements (20) for enhancing transfer of thermal energy between the electric motor (3) in the motor housing section (6) and water surrounding the part of the cylindrical outer surface (8) of the cylindrical section (7) of the motor housing section (6) forming the outermost surface of the propulsion unit.

13. The propulsion unit according to any of the claims 1 to 12, **characterized by** the cylindrical section (7) of the motor housing section (6) being of a single-layer construction

14. The propulsion unit according to any of the claims 1 to 13, **characterized by** the part (13) of the cylindrical section (7) of the cylindrical outer surface (8) of the motor housing section (6) in contact with liquid in the closed liquid cooling system (9) being provided with projecting heat-exchanging elements (21) for enhancing transfer of thermal energy between the electric motor (3) in the motor housing section (6) and liquid in the closed liquid cooling system (9).

15. The propulsion unit according to any of the claims 1 to 14, **characterized by** the closed liquid cooling system (9) being arranged fully enclosed by the shell structure (1) of the propulsion unit.

16. The propulsion unit according to any of the claims 1 to 15, **characterized by** the electric motor (3) being a permanent-magnet electric motor (3).

## Patentansprüche

1. Antriebseinheit eines Schiffes wie eine Azimut-Antriebseinheit eines Schiffes, wobei die Antriebseinheit umfasst
eine Schalenstruktur (1), die unterhalb eines Rumpfes (2) des Schiffes angeordnet ist und wenigstens teilweise in Wasser versenkbar ist, so dass die Schalenstruktur (1) wenigstens teilweise von Wasser umgeben ist, und
einen Elektromotor (3) zum Drehen eines Propellers (23) außerhalb der Schalenstruktur (1),
wobei der Elektromotor (3) einen Stator und einen Rotor (5) zum Rotieren im Stator (4) aufweist,
wobei der Elektromotor (3) in einem Motorgehäuseabschnitt (6) der Schalenstruktur (1) angeordnet ist, so dass der Stator (4) des Elektromotors (3) formschlüssig in einen zylindrischen Abschnitt (7) des Motorgehäuseabschnitts (6) der Schalenstruktur (1) eingebaut ist,
wobei der zylindrische Abschnitt (7) eine zylindrische äußere Fläche (8) aufweist, und
wobei die Schalenstruktur (1) einen Stützabschnitt umfasst, der ein unteres Ende, das mit dem Motorgehäuseabschnitt (6) der Schalenstruktur (1) verbunden ist, und ein oberes Ende, das mit dem Rumpf (2) des Schiffes verbunden ist, aufweist,
**gekennzeichnet**
**dadurch, dass** ein geschlossenes Flüssigkeitskühlsystem (9) einen Innenraum (10) aufweist, der Flüssigkeit enthält,
dadurch, dass der Innenraum (10) des geschlossenen Flüssigkeitskühlsystems (9) teilweise durch die zylindrische äußere Fläche (8) des zylindrischen Abschnitts (7) des Motorgehäuseabschnitts (6) begrenzt ist, so dass Flüssigkeit im Innenraum (10) des geschlossenen Flüssigkeitskühlsystems (9) mit der zylindrischen äußeren Fläche (8) des zylindrischen Abschnitts (7) des Motorgehäuseabschnitts (6) in direktem Kontakt ist, um thermische Energie zwischen dem Elektromotor (3), der im zylindrischen Abschnitt (7) des Motorgehäuseabschnitts (6) angeordnet ist, und Flüssigkeit im Innenraum (10) des geschlossenen Flüssigkeitskühlsystems (9) **über** den zylindrischen Abschnitt (7) des Motorgehäuseabschnitts (6) auszutauschen, und
dadurch, dass der Innenraum (10) des geschlossenen Flüssigkeitskühlsystems (9) teilweise durch die Schalenstruktur (1) der Antriebseinheit begrenzt ist, so dass Flüssigkeit im Innenraum (10) des geschlossenen Flüssigkeitskühlsystems (9) mit der Schalenstruktur (1) der Antriebseinheit in direktem Kontakt ist, um thermische Energie zwischen Flüssigkeit im Innenraum (10) des geschlossenen Flüssigkeitskühlsystems (9) und Wasser, das die Antriebseinheit umgibt, über die Schalenstruktur (1) der Antriebseinheit auszutauschen.

2. Antriebseinheit nach Anspruch 1, **gekennzeichnet**
**dadurch, dass** das geschlossene Flüssigkeitskühlsystem (9) die Form eines geschlossenen Flüssigkeitsbehälters (12) aufweist, der den Flüssigkeit enthaltenden Innenraum (10) ausbildet,
dadurch, dass der Innenraum (10) des geschlossenen Flüssigkeitsbehälters (12) teilweise durch einen Teil (13) der zylindrischen äußeren Fläche (8) des zylindrischen Abschnitts (7) des Motorgehäuseabschnitts (6) begrenzt ist, so dass Flüssigkeit im Innenraum (10) des geschlossenen Flüssigkeitsbehälters (12) mit diesem Teil (13) der zylindrischen äußeren Fläche (8) des zylindrischen Abschnitts (7) des Motorgehäuseabschnitts (6) in direktem Kontakt ist, um thermische Energie zwischen dem Elektromotor (3), der im zylindrischen Abschnitt (7) des Motorgehäuseabschnitts (6) angeordnet ist, und Flüssigkeit im Innenraum (10) des geschlossenen Flüssigkeitsbehälters (12) **über** diesen Teil (13) des zylindrischen Abschnitts (7) des Motorgehäuseabschnitts (6) zwischen dem Elektromotor (3) und Flüssigkeit im Innenraum (10) des geschlossenen Flüssigkeitsbehälters (12) auszutauschen, und
dadurch, dass der Innenraum (10) des geschlossenen Flüssigkeitsbehälters (12) teilweise durch die Schalenstruktur (1) der Antriebseinheit begrenzt ist, so dass Flüssigkeit im Innenraum (10) des geschlossenen Flüssigkeitsbehälters (12) mit der Schalenstruktur (1) in direktem Kontakt ist, um thermische Energie zwischen Flüssigkeit im Innenraum (10) des geschlossenen Flüssigkeitsbehälters (12) und Wasser, das die Schalenstruktur (1) umgibt, **über** die Schalenstruktur (1) auszutauschen.

3. Antriebseinheit nach Anspruch 1, **gekennzeichnet**
**dadurch, dass** das geschlossene Flüssigkeitskühlsystem (9) die Form eines geschlossenen Flüssigkeitszirkulationskühlsystems (14) hat, das den Flüssigkeit enthaltenden Innenraum (10) aufweist, und mit Flüssigkeitszirkulationsmitteln (15) zum Umwälzen von Flüssigkeit im Innenraum (10) des geschlossenen Flüssigkeitszirkulationskühlsystems (14) versehen ist,
dadurch, dass der Innenraum (10) des geschlossenen Flüssigkeitszirkulationskühlsystems (14) teilweise durch einen Teil (13) der zylindrischen äußeren Fläche (8) des zylindrischen Abschnitts (7) des Motorgehäuseabschnitts (6) begrenzt ist, so dass Flüssigkeit, die im Innenraum (10) des geschlossenen Flüssigkeitszirkulationskühlsystems (14) strömt, mit diesem Teil (13) der zylindrischen äußeren Fläche (8) des zylindrischen Abschnitts (7) des Motorgehäuseabschnitts (6) in direktem Kontakt ist, um thermische Energie zwischen dem Elektromotor (3), der im zylindrischen Abschnitt (7) des Motorgehäuseabschnitts (6) angeordnet ist, und Flüssigkeit, die im Innenraum (10) des geschlossenen Flüssigkeitszirkulationskühlsystems (14) strömt, über diesen Teil (13) des zylindrischen Abschnitts (7) des Motorgehäuseabschnitts (6) zwischen dem Elektromotor (3) und im Innenraum (10) des geschlossenen Flüssigkeitszirkulationskühlsystems (14) strömender Flüssigkeit auszutauschen, und
dadurch, dass der Innenraum (10) des geschlossenen Flüssigkeitszirkulationskühlsystems (14) zudem teilweise durch den Stützabschnitt (26) der Schalenstruktur (1) der Antriebseinheit begrenzt ist, so dass Flüssigkeit, die im Innenraum (10) des geschlossenen Flüssigkeitszirkulationskühlsystems (14) strömt, mit dem Stützabschnitt (26) der Schalenstruktur (1) in direktem Kontakt ist, um thermische Energie zwischen der im Innenraum (10) des geschlossenen Flüssigkeitszirkulationskühlsystems (14) strömenden Flüssigkeit und dem den Stützabschnitt (26) der Schalenstruktur (1) umgebenden Wasser über den Stützabschnitt (26) der Schalenstruktur (1) auszutauschen.

4. Antriebseinheit nach Anspruch 3, **gekennzeichnet dadurch, dass** der Teil (13) der zylindrischen äußeren Fläche (8) des zylindrischen Abschnitts (7) des Motorgehäuseabschnitts (6), der mit Flüssigkeit im Innenraum (10) des geschlossenen Flüssigkeitszirkulationskühlsystems (14) in Kontakt ist, mit Trennelementen (16) versehen ist, um an diesem Teil (13) der zylindrischen äußeren Fläche (8) des zylindrischen Abschnitts (7) des Motorgehäuseabschnitts (6) entlang mehrere Einzelströme von Flüssigkeit zu erzeugen.

5. Antriebseinheit nach Anspruch 3 oder 4, **gekennzeichnet**
**dadurch, dass** das geschlossene Flüssigkeitszirkulationskühlsystem (14) mit einem **ersten Flüssigkeitsbehälter (17)** an einer Stelle des geschlossenen Flüssigkeitszirkulationskühlsystems (14) versehen ist, wo der Innenraum (10) des geschlossenen Flüssigkeitszirkulationskühlsystems (14) teilweise durch diesen Teil (13) der zylindrischen äußeren Fläche (8) des zylindrischen Abschnitts (7) des Motorgehäuseabschnitts (6) begrenzt ist,
dadurch, dass der erste Flüssigkeitsbehälter (17) einen ersten Innenraum aufweist, der einen Teil des Innenraums (10) des geschlossenen Flüssigkeitszirkulationskühlsystems (14) bildet,
dadurch, dass der erste Flüssigkeitsbehälter (17) mit dem geschlossenen Flüssigkeitszirkulationskühlsystem (14) strömungstechnisch verbunden ist, so dass Flüssigkeit, die im geschlossenen Flüssigkeitszirkulationskühlsystem (14) strömt, durch den ersten Innenraum des ersten Flüssigkeitsbehälters (17) strömt, und
dadurch, dass der erste Innenraum des ersten Flüssigkeitsbehälters (17) teilweise durch diesen Teil der zylindrischen äußeren Fläche (8) des zylindrischen Abschnitts (7) des Motorgehäuseabschnitts (6) begrenzt ist, so dass Flüssigkeit in **einem ersten Innenraum** des ersten Flüssigkeitsbehälters (17) mit der zylindrischen äußeren Fläche (8) des zylindrischen Abschnitts (7) des Motorgehäuseabschnitts (6) in direktem Kontakt ist, um thermische Energie zwischen dem Elektromotor (3), der im Motorgehäuseabschnitt (6) angeordnet ist, und Flüssigkeit, die im ersten Innenraum des ersten Flüssigkeitsbehälters (17) strömt, über diesen Teil der zylindrischen äußeren Fläche (8) des zylindrischen Abschnitts (7) des Motorgehäuseabschnitts (6) auszutauschen.

6. Antriebseinheit nach Anspruch 5, **gekennzeichnet dadurch, dass** der erste Flüssigkeitsbehälter (17) zudem teilweise durch den Stützabschnitt (26) der Schalenstruktur (1) begrenzt ist, so dass Flüssigkeit, die im ersten Innenraum des ersten Flüssigkeitsbehälters (17) strömt, zusätzlich mit dem Stützabschnitt (26) der Schalenstruktur (1) in direktem Kontakt ist, um thermische Energie zwischen Flüssigkeit, die im ersten Innenraum des ersten Flüssigkeitsbehälters (17) des geschlossenen Flüssigkeitszirkulationskühlsystems (14) strömt, und Wasser, das den Stützabschnitt (26) der Schalenstruktur (1) umgibt, über den Stützabschnitt (26) der Schalenstruktur (1) auszutauschen.

7. Antriebseinheit nach einem der Ansprüche 3 bis 6, **gekennzeichnet**
**dadurch, dass** das geschlossene Flüssigkeitszirkulationskühlsystem (14) mit einem zweiten Flüssigkeitsbehälter (19) an einer Stelle des geschlossenen Flüssigkeitszirkulationskühlsystems (14) versehen ist, wo das geschlossene Flüssigkeitszirkulationskühlsystem (14) teilweise durch den Stützabschnitt (26) der Schalenstruktur (1) begrenzt ist, so dass der zweite Flüssigkeitsbehälter (19) teilweise durch den Stützabschnitt (26) der Schalenstruktur (1) begrenzt ist,
dadurch, dass der zweite Flüssigkeitsbehälter (19) einen zweiten Innenraum aufweist, der einen Teil des Innenraums (10) des geschlossenen Flüssigkeitszirkulationskühlsystems (14) bildet,
dadurch, dass der zweite Flüssigkeitsbehälter (19) mit dem geschlossenen Flüssigkeitszirkulationskühlsystem (14) strömungstechnisch verbunden ist, so dass Flüssigkeit, die im geschlossenen Flüssigkeitszirkulationskühlsystem (14) strömt, durch den zweiten Innenraum des zweiten Flüssigkeitsbehälters (19) strömt, und
dadurch, dass der zweite Flüssigkeitsbehälter (19) teilweise durch den Stützabschnitt (26) der Schalenstruktur (1) begrenzt ist, so dass Flüssigkeit im zweiten Innenraum des zweiten Flüssigkeitsbehälters (19) mit dem Stützabschnitt (26) der Schalenstruktur (1) in direktem Kontakt ist, um thermische Energie zwischen Flüssigkeit, die im zweiten Innenraum des zweiten Flüssigkeitsbehälters (19) strömt, und Wasser, das den Stützabschnitt (26) der Schalenstruktur (1) umgibt, über den Stützabschnitt (26) der Schalenstruktur (1) auszutauschen.

8. Antriebseinheit nach einem der Ansprüche 3 bis 7, **gekennzeichnet**
**dadurch, dass** der Stützabschnitt (26) der Schalenstruktur (1) mit einem Hohlraum (25) versehen ist, der mit Wasser, das die Schalenstruktur (1) umgibt, strömungstechnisch verbunden ist, damit Wasser, das die Schalenstruktur (1) umgibt, in den Hohlraum (25) eintreten und aus dem Hohlraum (25) austreten kann,
dadurch, dass das geschlossene Flüssigkeitszirkulationskühlsystem (14) einen Rohrabschnitt (29) umfasst,
dadurch, dass der Innenraum des geschlossenen Flüssigkeitszirkulationskühlsystems (14) teilweise durch den Rohrabschnitt (29) begrenzt ist, und
dadurch, dass der Rohrabschnitt (29) im Hohlraum (25) angeordnet ist, so dass eine Außenfläche des Rohrabschnitts (29) im Hohlraum (25) mit dem die Schalenstruktur (1) umgebenden Wasser in direktem Kontakt ist.

9. Antriebseinheit nach Anspruch 8, **gekennzeichnet**
**dadurch, dass** der Rohrabschnitt (29) ein Teil eines Flüssig/Flüssig-Wärmetauschers zum Austausch von thermischer Energie zwischen der Flüssigkeit im Innenraum (10) des geschlossenen Flüssigkeitszirkulationskühlsystems (14) und dem die Schalenstruktur (1) umgebenden Wasser ist, und
dadurch, dass der Flüssig/Flüssig-Wärmetauscher im Hohlraum (25) angeordnet ist.

10. Antriebseinheit nach Anspruch 8 oder 9, **gekennzeichnet**
**dadurch, dass** der Hohlraum (25) wenigstens teilweise durch wenigstens eine Abdeckung (27) geschlossen ist, die einen Teil der Schalenstruktur (1) bildet.

11. Antriebseinheit nach einem der Ansprüche 1 bis 10, **gekennzeichnet dadurch, dass** das untere Ende des Stützabschnitts (26) der Schalenstruktur (1) mit dem Motorgehäuseabschnitt (6) der Schalenstruktur (1) verbunden ist, so dass die zylindrische äußere Fläche (8) des zylindrischen Abschnitts (7) des Motorgehäuseabschnitts (6) der Schalenstruktur (1) der Antriebseinheit teilweise die Außenfläche der Antriebseinheit bildet.

12. Antriebseinheit nach Anspruch 11, **gekennzeichnet dadurch, dass** der Teil der zylindrischen äußeren Fläche (8) des zylindrischen Abschnitts (7) des Motorgehäuseabschnitts (6), der die Außenfläche der Antriebseinheit bildet, mit überstehenden Wärmetauschelementen (20) versehen ist, um die Übertragung von thermischer Energie zwischen dem Elektromotor (3) im Motorgehäuseabschnitt (6) und dem Wasser, das den die Außenfläche der Antriebseinheit bildenden Teil der zylindrischen äußeren Fläche (8) des zylindrischen Abschnitts (7) des Motorgehäuseabschnitts (6) umgibt, zu verstärken.

13. Antriebseinheit nach einem der Ansprüche 1 bis 12, **gekennzeichnet dadurch dass** der zylindrische Abschnitt (7) des Motorgehäuseabschnitts (6) einlagig aufgebaut ist.

14. Antriebseinheit nach einem der Ansprüche 1 bis 13, **gekennzeichnet dadurch, dass** der Teil (13) des zylindrischen Abschnitts (7) der zylindrischen äußeren Fläche (8) des Motorgehäuseabschnitts (6), der mit Flüssigkeit im geschlossenen Flüssigkeitskühlsystem (9) in Kontakt ist, mit überstehenden Wärmetauschelementen (21) versehen ist, um die Übertragung von thermischer Energie zwischen dem Elektromotor (3) im Motorgehäuseabschnitt (6) und Flüssigkeit im geschlossenen Flüssigkeitskühlsystem (9) zu verstärken.

15. Antriebseinheit nach einem der Ansprüche 1 bis 14, **gekennzeichnet dadurch, dass** das geschlossene Flüssigkeitskühlsystem (9) so angeordnet ist, dass es von der Schalenstruktur (1) der Antriebseinheit komplett umschlossen ist.

16. Antriebseinheit nach einem der Ansprüche 1 bis 15, **gekennzeichnet dadurch, dass** der Elektromotor (3) ein Dauermagnet-Elektromotor (3) ist.

## Revendications

1. Unité de propulsion d'un navire, telle qu'une unité de propulsion azimutale d'un navire, ladite unité de propulsion comprenant
une structure d'enveloppe (1) disposée en dessous d'une coque (2) du navire et au moins partiellement immersible dans l'eau de manière que la structure d'enveloppe (1) soit au moins partiellement entourée d'eau, et
un moteur électrique (3) pour tourner une hélice (23) à l'extérieur de la structure d'enveloppe (1),
ledit moteur électrique (3) ayant un stator et un rotor (5) pour la rotation dans le stator (4),
ledit moteur électrique (3) étant disposé dans un tronçon de carter de moteur (6) de la structure d'enveloppe (1) de manière que le stator (4) du moteur électrique (3) soit monté par concordance de forme dans une section cylindrique (7) du tronçon de carter de moteur (6) de la structure d'enveloppe (1),
ladite section cylindrique (7) ayant une surface extérieure cylindrique (8), et
ladite structure d'enveloppe (1) comprenant un tronçon de support ayant une extrémité inférieure reliée au tronçon de carter de moteur (6) de la structure d'enveloppe (1) et une extrémité supérieure reliée à la coque (2) du navire, et
**caractérisée en ce**
**qu'**un système de refroidissement par liquide fermé (9) a un espace intérieur (10) contenant du liquide,
**que** l'espace intérieur (10) du système de refroidissement par liquide fermé (9) est partiellement limité par la surface extérieure cylindrique (8) de la section cylindrique (7) du tronçon de carter de moteur (6) de manière que le liquide dans l'espace intérieur (10) du système de refroidissement par liquide fermé (9) soit en contact direct avec la surface extérieure cylindrique (8) de la section cylindrique (7) du tronçon de carter de moteur (6) pour l'échange d'énergie thermique entre le moteur électrique (3) disposé dans la section cylindrique (7) du tronçon de carter de moteur (6) et le liquide dans l'espace intérieur (10) du système de refroidissement par liquide fermé (9) **via** la section cylindrique (7) du tronçon de carter de moteur (6), et
**que** l'espace intérieur (10) du système de refroidissement par liquide fermé (9) est partiellement limité par la structure d'enveloppe (1) de l'unité de propulsion de manière que le liquide dans l'espace intérieur (10) du système de refroidissement par liquide fermé (9) soit en contact direct avec la structure d'enveloppe (1) de l'unité de propulsion pour l'échange d'énergie thermique entre le liquide dans l'espace intérieur (10) du système de refroidissement par liquide fermé (9) et l'eau entourant l'unité de propulsion, via la structure d'enveloppe (1) de l'unité de propulsion.

2. Unité de propulsion selon la revendication 1, **caractérisée en ce**
**que** ledit système de refroidissement par liquide fermé (9) a la forme d'un réservoir de liquide fermé (12) formant ledit espace intérieur (10) contenant du liquide,
**que** l'espace intérieur (10) du réservoir de liquide fermé (12) est partiellement limité par une partie (13) de la surface extérieure cylindrique (8) de la section cylindrique (7) du tronçon de carter de moteur (6) de manière que le liquide dans l'espace intérieur (10) du réservoir de liquide fermé (12) soit en contact direct avec ladite partie (13) de la surface extérieure cylindrique (8) de la section cylindrique (7) du tronçon de carter de moteur (6) pour l'échange d'énergie thermique entre le moteur électrique (3) disposé dans la section cylindrique (7) du tronçon de carter de moteur (6) et le liquide dans l'espace intérieur (10) du réservoir de liquide fermé (12), **via** ladite partie (13) de la section cylindrique (7) du tronçon de carter de moteur (6) entre le moteur électrique (3) et le liquide dans l'espace intérieur (10) du réservoir de liquide fermé (12), et
**que** l'espace intérieur (10) du réservoir de liquide fermé (12) est partiellement limité par la structure d'enveloppe (1) de l'unité de propulsion de manière que le liquide dans l'espace intérieur (10) du réservoir de liquide fermé (12) soit en contact direct avec la structure d'enveloppe (1) pour l'échange d'énergie thermique entre le liquide dans l'espace intérieur (10) du réservoir de liquide fermé (12) et l'eau entourant la structure d'enveloppe (1), **via** la structure d'enveloppe (1).

3. Unité de propulsion selon la revendication 1, **caractérisée en ce**
**que** ledit système de refroidissement par liquide fermé (9) a la forme d'un système de refroidissement par circulation de liquide fermée (14) comprenant l'espace intérieur (10) contenant du liquide et étant pourvu de moyens de circulation de liquide (15) pour faire circuler du liquide dans l'espace intérieur (10) du système de refroidissement par circulation de liquide fermée (14),
**que** l'espace intérieur (10) du système de refroidissement par circulation de liquide fermée (14) est partiellement limité par une partie (13) de la surface extérieure cylindrique (8) de la section cylindrique (7) du tronçon de carter de moteur (6) de manière que le liquide coulant dans l'espace intérieur (10) du système de refroidissement par circulation de liquide fermée (14) soit en contact direct avec ladite partie de la surface extérieure cylindrique (8) de la section cylindrique (7) du tronçon de carter de moteur (6) pour l'échange d'énergie thermique entre le moteur électrique (3) disposé dans la section cylindrique (7) du tronçon de carter de moteur (6) et le liquide coulant dans l'espace intérieur (10) du système de refroidissement par circulation de liquide fermée (14), via ladite partie (13) de la section cylindrique (7) du tronçon de carter de moteur (6) entre le moteur électrique (3) et le liquide circulant dans l'espace intérieur (10) du système de refroidissement par circulation de liquide fermée (14), et
**que** l'espace intérieur (10) du système de refroidissement par circulation de liquide fermée (14) est en outre partiellement limité par le tronçon de support (26) de la structure d'enveloppe (1) de l'unité de propulsion de manière que le liquide coulant dans l'espace intérieur (10) du système de refroidissement par circulation de liquide fermée (14) soit en contact direct avec le tronçon de support (26) de la structure d'enveloppe (1) pour l'échange d'énergie thermique entre le liquide coulant dans l'espace intérieur (10) du système de refroidissement par circulation de liquide fermée (14) et l'eau entourant le tronçon de support (26) de la structure d'enveloppe (1), via le tronçon de support (26) de la structure d'enveloppe (1).

4. Unité de propulsion selon la revendication 3, **caractérisée en ce que** la partie (13) de la surface extérieure cylindrique (8) de la section cylindrique (7) du tronçon de carter de moteur (6) en contact avec le liquide dans l'espace intérieur (10) du système de refroidissement par circulation de liquide fermée (14) est munie d'éléments de séparation (16) pour créer plusieurs flux individuels de liquide le long de ladite partie (13) de la surface extérieure cylindrique (8) de la section cylindrique (7) du tronçon de carter de moteur (6).

5. Unité de propulsion selon la revendication 3 ou 4, **caractérisée en ce**
**que** ledit système de refroidissement par circulation de liquide fermée (14) est muni d'un **premier réservoir de liquide (17)** à un point du système de refroidissement par circulation de liquide fermée (14) où l'espace intérieur (10) du système de refroidissement par circulation de liquide fermée (14) est partiellement limité par ladite partie (13) de la surface extérieure cylindrique (8) de la section cylindrique (7) du tronçon de carter de moteur (6),
**que** le premier réservoir de liquide (17) a un premier espace intérieur formant une partie de l'espace intérieur (10) du système de refroidissement par circulation de liquide fermée (14),
**que** le premier réservoir de liquide (17) est en communication fluidique avec le système de refroidissement par circulation de liquide fermée (14) de manière que le liquide coulant dans le système de refroidissement par circulation de liquide fermée (14) coule au travers du premier espace intérieur du premier réservoir de liquide (17), et
**que** le premier espace intérieur du premier réservoir de liquide fermé (17) est partiellement limité par ladite partie de la surface extérieure cylindrique (8) de la section cylindrique (7) du tronçon de carter de moteur (6) de manière que le liquide dans **un premier espace intérieur** du premier réservoir de liquide (17) soit en contact direct avec la surface extérieure cylindrique (8) de la section cylindrique (7) du tronçon de carter de moteur (6) pour l'échange d'énergie thermique entre le moteur électrique (3) disposé dans le tronçon de carter de moteur (6) et le liquide coulant dans le premier espace intérieur du premier réservoir de liquide (17), **au travers de** ladite partie de la surface extérieure cylindrique (8) de la section cylindrique (7) du tronçon de carter de moteur (6).

6. Unité de propulsion selon la revendication 5, **caractérisée en ce que** le premier réservoir de liquide (17) est en outre partiellement limité par le tronçon de support (26) de la structure d'enveloppe (1) de manière que le liquide coulant dans le premier espace intérieur du premier réservoir de liquide (17) soit également en contact direct avec le tronçon de support (26) de la structure d'enveloppe (1) pour l'échange d'énergie thermique entre le liquide coulant dans le premier espace intérieur du premier réservoir de liquide (17) du système de refroidissement par circulation de liquide fermée (14) et l'eau entourant le tronçon de support (26) de la structure d'enveloppe (1), au travers du tronçon de support (26) de la structure d'enveloppe (1).

7. Unité de propulsion selon l'une des revendications 3 à 6, **caractérisée en ce**
**que** ledit système de refroidissement par circulation de liquide fermée (14) est muni d'un deuxième réservoir de liquide (19) à un point du système de refroidissement par circulation de liquide fermée (14) où le système de refroidissement par circulation de liquide fermée (14) est partiellement limité par le tronçon de support (26) de la structure d'enveloppe (1) de manière que le deuxième réservoir de liquide (19) soit partiellement limité par le tronçon de support (26) de la structure d'enveloppe (1).
**que** le deuxième réservoir de liquide (19) a un deuxième espace intérieur formant une partie de l'espace intérieur (10) du système de refroidissement par circulation de liquide fermée (14),
**que** le deuxième réservoir de liquide (19) est en communication fluidique avec le système de refroidissement par circulation de liquide fermée (14) de manière que le liquide coulant dans le système de refroidissement par circulation de liquide fermée (14) coule au travers du deuxième espace intérieur du deuxième réservoir de liquide (19), et
**que** le deuxième réservoir de liquide (19) est partiellement limité par le tronçon de support (26) de la structure d'enveloppe (1) de manière que le liquide coulant dans le deuxième espace intérieur du deuxième réservoir de liquide (19) soit en contact direct avec le tronçon de support (26) de la structure d'enveloppe (1) pour l'échange d'énergie thermique entre le liquide coulant dans le deuxième espace intérieur du deuxième réservoir de liquide (19) et l'eau entourant le tronçon de support (26) de la structure d'enveloppe (1), au travers du tronçon de support (26) de la structure d'enveloppe (1).

8. Unité de propulsion selon l'une des revendications 3 à 7, **caractérisée en ce**
**que** le tronçon de support (26) de la structure d'enveloppe (1) est muni d'une cavité (25) en communication fluidique avec de l'eau entourant la structure d'enveloppe (1) pour permettre à l'eau entourant la structure d'enveloppe (1) d'entrer dans la cavité (25) et de sortir de la cavité (25),
**que** le système de refroidissement par circulation de liquide fermée (14) comprend un tronçon de tube (29),
**que** l'espace intérieur du système de refroidissement par circulation de liquide fermée (14) est partiellement limité par ledit tronçon de tube (29), et
**que** le tronçon de tube (29) est disposé dans la cavité (25) de manière qu'une surface extérieure du tronçon de tube (29) soit dans la cavité (25) en contact direct avec l'eau entourant la structure d'enveloppe (1).

9. Unité de propulsion selon la revendication 8, **caractérisée en ce**
**que** le tronçon de tube (29) constitue une partie d'un échangeur de chaleur liquide/liquide pour l'échange d'énergie thermique entre le liquide dans l'espace intérieur (10) du système de refroidissement par circulation de liquide fermée (14) et l'eau entourant la structure d'enveloppe (1), et
**que** l'échangeur de chaleur liquide/liquide est disposé dans la cavité (25).

10. Unité de propulsion selon la revendication 8 ou 9, **caractérisée en ce**
**que** la cavité (25) est au moins partiellement fermée par au moins un capot (27) formant une partie de la structure d'enveloppe (1).

11. Unité de propulsion selon l'une des revendications 1 à 10, **caractérisée en ce que** l'extrémité inférieure du tronçon de support (26) de la structure d'enveloppe (1) est reliée au tronçon de carter de moteur (6) de la structure d'enveloppe (1) de manière que la surface extérieure cylindrique (8) de la section cylindrique (7) du tronçon de carter de moteur (6) de la structure d'enveloppe (1) de l'unité de propulsion forme partiellement la surface externe de l'unité de propulsion.

12. Unité de propulsion selon la revendication 11, **caractérisée en ce que** la partie de la surface extérieure cylindrique (8) de la section cylindrique (7) du tronçon de carter de moteur (6) formant la surface externe de l'unité de propulsion est munie d'éléments échangeurs de chaleur en saillie (20) pour l'amélioration du transfert d'énergie thermique entre le moteur électrique (3) dans le tronçon de carter de moteur (6) et l'eau entourant la partie de la surface extérieure cylindrique (8) de la section cylindrique (7) du tronçon de carter de moteur (6) formant la surface externe de l'unité de propulsion.

13. Unité de propulsion selon l'une des revendications 1 à 12, **caractérisée en ce que** la section cylindrique (7) du tronçon de carter de moteur (6) est d'une structure monocouche.

14. Unité de propulsion selon l'une des revendications 1 à 13, **caractérisée en ce que** la partie (13) de la section cylindrique (7) de la surface extérieure cylindrique (8) du tronçon de carter de moteur (6) en contact avec du liquide dans le système de refroidissement par liquide fermé (9) est munie d'éléments échangeurs de chaleur en saillie (21) pour l'amélioration du transfert d'énergie thermique entre le moteur électrique (3) dans le tronçon de carter de moteur (6) et le liquide dans le système de refroidissement par liquide fermé (9).

15. Unité de propulsion selon l'une des revendications 1 à 14, **caractérisée en ce que** ledit système de refroidissement par liquide fermé (9) est disposé de manière à être entièrement enfermé par la structure d'enveloppe (1) de l'unité de propulsion.

16. Unité de propulsion selon l'une des revendications 1 à 15, **caractérisée en ce que** le moteur électrique (3) est un moteur électrique à aimants permanents (3).
